# EUROPÄISCHE PATENTANMELDUNG

(11) **EP 1 156 351 A2**
(43) Veröffentlichungstag der Anmeldung: **21.11.2001**
(21) Anmeldenummer: 00811082.7
(22) Anmeldetag: 16.11.2000
(51) Int. Cl.: G02B 6/38

(54) **Faseroptisches Steckverbindersystem sowie Duplexklammer für ein solches Steckverbindersystem**

(30) Priorität: 27.04.2000 CH 826002000
(71) Anmelder: HUBER & SUHNER AG, 9100 Herisau (CH)
(72) Erfinder: Schoch, Jakob, 9103 Schwellbrunn (CH)
(74) Vertreter: Hug Interlizenz AG

(57) **Zusammenfassung**

Bei einem faseroptischen Steckverbindersystem werden zwei faseroptische Einzelsteckverbinder (23, 24) mittels einer Verbindungsklammer (10) in paralleler Anordnung zu einem Mehrfachsteckverbinder verbunden, wobei die Verbindungsklammer (10) aus zwei Klammerhälften (10a, 10b) besteht, welche einrastend miteinander verbindbar sind und Aufnahmeräume (11, 12) zur Aufnahme und Halterung der beiden Einzelsteckverbinder (23, 24) aufweisen, und wobei die Einzelsteckverbinder (23, 24) jeweils ein Gehäuse (27, 28) und eine an das Gehäuse (27, 28) nach hinten anschliessende Knickschutztülle (25, 26) umfassen.

Bei einem solchen System wird eine vereinfachte und flexible Anwendung bei unterschiedlichen Steckertypen dadurch erreicht, dass die Einzelsteckverbinder (23, 24) von der Verbindungsklammer (10) im Bereich ihrer Knickschutztüllen (25, 26) miteinander verbunden und in paralleler Anordnung gehalten werden.

## Beschreibung

### TECHNISCHES GEBIET

Die vorliegende Erfindung bezieht sich auf das Gebiet der Verbindungstechnik für faseroptische Systeme. Sie betrifft ein faseroptisches Steckverbindersystem gemäss dem Oberbegriff des Anspruchs sowie eine Verbindungsklammer für ein solches Steckverbindersystem gemäss dem Oberbegriff des Anspruchs 7.

Ein solches Steckverbindersystem und eine solche Verbindungsklammer sind z.B. aus den Druckschriften US-A-5,123,071 oder US-A-5,343,547 bekannt.

### STAND DER TECHNIK

Für die lösbare Verbindung von einzelnen faseroptischen Kabeln sind seit langem Einzelsteckverbinder (z.B. Simplexsteckverbinder oder Einzelsteckverbinder, bei denen in einem Stecker mehrere Fasern parallel angeordnet sind und gleichzeitig verbunden werden) unterschiedlicher Ausgestaltung bekannt, bei denen die optische Faser(n) des Kabels beispielsweise in einer in einem Steckergehäuse angeordneten Ferrule endet bzw. enden. Zum Verbinden werden dann zwei Steckverbinder von gegenüberliegenden Seiten so in ein Kupplungsteil gesteckt, dass die beiden Ferrulen mit ihren Stirnseiten aneinanderstossen. Dem Fachmann bekannte Beispiele für Simplexsteckverbinder bzw. Einzelsteckverbinder sind die ST- oder SC- oder MT-RJ- oder E2000-Steckverbinder.

Sollen nun beispielsweise bei Simplexsteckverbindern für die bidirektionale Informationsübertragung zwei Kabel parallel in einer Duplexanordnung verbunden werden, hat es sich bewährt, durch spezielle Vorrichtungen, welche z.B. die Form von Klammern haben, zwei Simplexsteckverbinder in einer parallelen Anordnung zu einem Duplexsteckverbinder zusammenzufassen und zu verbinden. Für die technische Realisierung solcher aus Simplexsteckverbindern bestehenden Duplexsysteme sind verschiedene Lösungen vorgeschlagen worden.

Eine dieser Lösungen besteht darin, zwei nebeneinanderliegende Simplexsteckverbinder durch ein spezielles Zwischenstück miteinander zu verbinden. Das Zwischenstück ist dabei im Zwischenraum zwischen den beiden Simplexsteckverbindern angeordnet und kann mit den Gehäusen dieser Steckverbinder einrastend verbunden werden. Beispiele für ein derartiges Zwischenstück sind z.B. in der US-A-4,953,929 oder in der US-A-5,553,180 oder in der US-A-5,579,425 zu finden.

Eine andere bekannte Lösung besteht darin, die beiden Simplexsteckverbinder mit ihren Steckergehäusen in einen festen Ueberrahmen zu stecken und zu halten. Die Befestigung im Ueberrahmen kann dabei mittels separater Verriegelungselemente erfolgen (US-A-5,748,821), oder durch integrierte Einrastvorrichtungen an Rahmen und Steckverbindergehäuse (US-A-5,613,025).

Eine weitere bekannte Lösung verwendet spezielle Klammern, die über die nebeneinanderliegenden Steckverbindergehäuse geschnappt werden. Die Klammer kann dabei als einseitige Klammer ausgebildet sein (US-A-5,675,682). Sie kann aber auch aus zwei identischen Klammerhälften bestehen, die von gegenüberliegenden Seiten über die Steckverbindergehäuse gelegt und miteinander verrastet werden (siehe die US-A-5,123,071 oder die US-A-5,343,547).

Eine andere bekannte Lösung (US-A-5,528,712) verzichtet auf eine Verbindung der beiden Simplexsteckverbinder im Bereich der Steckverbindergehäuse und verwendet statt dessen ein einstückiges Verbindungsteil, das aus zwei fest miteinander verbundenen Knickschutztüllen besteht und mit zwei Simplexsteckverbindergehäusen kombiniert wird. Problematisch ist bei dieser Lösung, dass nicht zwei fertig konfektionierte Simplexsteckverbinder (mit Einzel-Knickschutztülle) nachträglich auf einfache Weise zu einem Duplexsteckverbinder verbunden werden können, sondern dass der Duplexsteckverbinder von vornherein als solcher konfektioniert werden muss.

Bei den bisher beschriebenen bekannten Duplexsteckverbindersystemen sind die Gehäuse der Simplexsteckverbinder und die Verbindungsmittel zur Herstellung eines Duplexsteckverbinders aus zwei Simplexsteckverbindern präzise aufeinander abgestimmt, damit die Gehäuse und die Verbindungsmittel miteinander eine sichere und stabile Verbindung eingehen. Dies führt dazu, dass für bestimmte Typen und Fabrikate von Simplexsteckverbindern auch nur vorbestimmte Verbindungsmittel verwendet werden können, was hinsichtlich Herstellung und Lagerhaltung derartiger Verbindungsmittel einen erhöhten Aufwand bzw. einen Mangel an Flexibilität zur Folge hat.

Hinzu kommt, dass bei einer solchen präzisen Abstimmung von Steckverbindergehäusen und Verbindungsmitteln meist zusätzliche Vorkehrungen getroffen werden müssen, um den beiden Simplexsteckverbindern im Duplexsteckverbinder ausreichend Spiel für den Einsteckvorgang zu gewähren. So ist beispielsweise bei dem o.g. Zwischenstück aus der US-A-4,953,929 ein spezielles elastisches Kopplungsstück (43 in der dortigen Fig. 7A) vorgesehen, um den beiden Simplexsteckverbindern eine relative Bewegung zueinander zu ermöglichen.

### DARSTELLUNG DER ERFINDUNG

Es ist daher Aufgabe der Erfindung, ein faseroptische Steckverbindersystem der eingangs genannten Art so weiterzuentwickeln, dass mit denselben Verbindungsmitteln auf einfache Weise unterschiedliche Fabrikate und Typen von Einzelsteckverbindern zu einem Mehrfachsteckverbinder verbunden werden können, wobei gleichzeitig ohne weitere Vorkehrungen ein ausreichendes Spiel der Einzelsteckverbinder gewährleistet ist, sowie eine Verbindungsklammer für eine solches System anzugeben.

Die Aufgabe wird durch die Gesamtheit der Merkmale der Ansprüche 1 und 7 gelöst. Der Kern der Erfindung besteht darin, dass zur Verbindung eine Verbindungsklammer eingesetzt wird und dass die Einzelsteckverbinder von der Verbindungsklammer im Bereich ihrer Knickschutztüllen miteinander verbunden und in paralleler Anordnung gehalten werden. Da die Knickschutztüllen üblicherweise aus einem elastischen Material bestehen, lässt sich in weiten Grenzen eine Anpassung von Verbindungsklammer und Knickschutztüllen und gleichzeitig ausreichend Spiel für die beiden Einzelsteckverbinder erreichen.

Eine erste bevorzugte Ausgestaltung des Systems nach der Erfindung zeichnet sich dadurch aus, dass die Aufnahmeräume der Klammerhälften in Form und Abmessung so ausgebildet sind, dass in ihnen Knickschutztüllen mit unterschiedlichen Aussendurchmessern klemmend gehalten werden, wobei pro Knickschutztülle wenigstens ein Aufnahmeraum mit einem vieleckigen, vorzugsweise trapezförmigen, Querschnitt vorgesehen ist, und dass insbesondere in jeder der Klammerhälften für jeden der Einzelsteckverbinder jeweils ein Aufnahmeraum vorgesehen ist, und dass einer der beiden jedem Einzelsteckverbinder zugeordneten Aufnahmeräume einen vieleckigen, vorzugsweise trapezförmigen, Querschnitt und der andere einen runden Querschnitt aufweist. Durch die Ausbildung zweier Aufnahmeräume mit einem vieleckigen und einem runden Querschnitt kann ein relativ grosses Toleranzfeld von Knickschutzdurchmessern geklemmt werden, da diese gerade auf der vieleckigen Seite genügend Raum für eine elastische Verformung erhalten.

Die Herstellung und Lagerhaltung wird weiter vereinfacht, wenn die beiden Klammerhälften gemäss einer weiteren bevorzugten Ausgestaltung der Erfindung gleich sind und durch Drehung um eine parallel zur Steckrichtung verlaufende Drehachse ineinander übergehen.

Für den Fall, dass die Einzelsteckverbinder seitlich am Gehäuse angeordnete Hebel zum Entriegeln der Einzelsteckverbinder aufweisen, wie dies in der US-A-5,675,682 gezeigt ist, ist es vorteilhaft, dass auf den Aussenseiten der Klammerhälften Anschrägungen zur Aufnahme der Hebel ausgebildet sind.

Eine bevorzugte Ausgestaltung der erfindungsgemässen Verbindungsklammer ist dadurch gekennzeichnet, dass die Aufnahmeräume der Klammerhälften in Form und Abmessung so ausgebildet sind, dass in ihnen Knickschutztüllen mit unterschiedlichen Aussendurchmessern klemmend gehalten werden, dass pro Knickschutztülle wenigstens ein Aufnahmeraum mit einem vieleckigen, vorzugsweise trapezförmigen, Querschnitt vorgesehen ist, und dass insbesondere in jeder der Klammerhälften für jeden der Einzelsteckverbinder jeweils ein Aufnahmeraum vorgesehen ist, und dass einer der beiden jedem Einzelsteckverbinder zugeordneten Aufnahmeräume einen vieleckigen, vorzugsweise trapezförmigen, Querschnitt und der andere einen runden Querschnitt aufweist. Die Verbindung wird dabei verbessert, wenn in einem oder mehreren Aufnahmeräumen als Rutschsicherung quer zur Steckrichtung verlaufende Rippen angeordnet sind.

Weitere Ausführungsformen ergeben sich aus den abhängigen Ansprüchen.

### KURZE ERLÄUTERUNG DER FIGUREN

Die Erfindung soll nachfolgend anhand von Ausführungsbeispielen im Zusammenhang mit der Zeichnung näher erläutert werden. Es zeigen
- Fig. 1: in perspektivischer Darstellung ein bevorzugtes Ausführungsbeispiel einer aus zwei identischen Klammerhälften bestehenden Verbindungsklammer nach der Erfindung; und
- Fig. 2: in einer Momentaufnahme die Anwendung der Verbindungsklammer nach Fig. 1 zum Verbinden zweier Einzelsteckverbinder mit Knickschutztülle.

### WEGE ZUR AUSFÜHRUNG DER ERFINDUNG

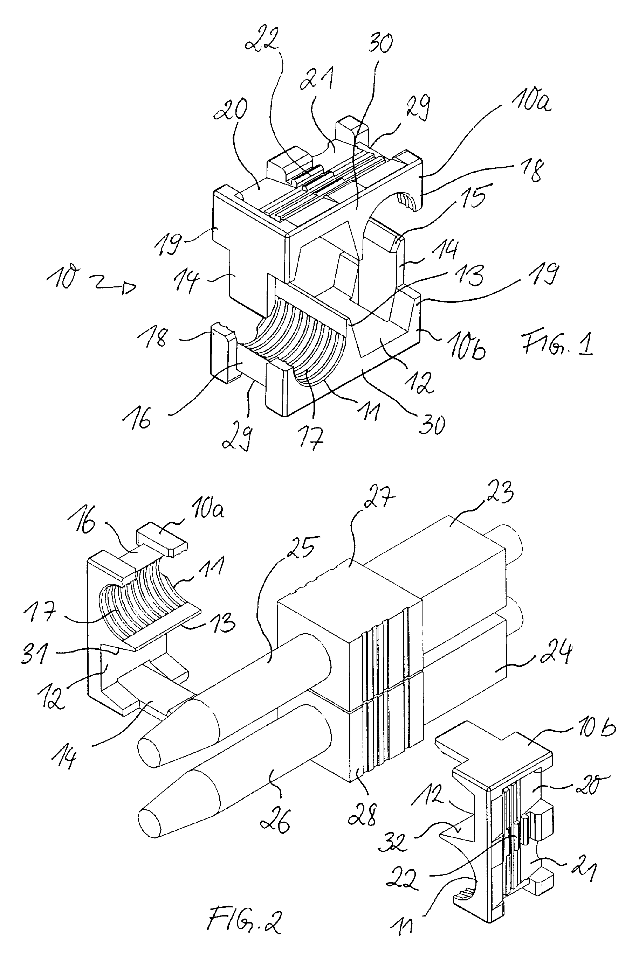

In Fig. 1 ist in perspektivischer Darstellung ein bevorzugtes Ausführungsbeispiel einer Verbindungsklammer nach der Erfindung wiedergegeben, welche für die Verbindung von zwei Einzelsteckverbindern, insbesondere Simplexsteckverbindern, ausgelegt ist. Die Verbindungsklammer 10 umfasst zwei identische Klammerhälften 10a und 10b, die (in der dargestellten Anordnung durch eine Rotation um 180° um eine parallel zur Längsachse der Steckverbinder liegende Mittelachse ineinander überführt werden können. Jede der Klammerhälften 10a,b weist eine Grundplatte 30 auf, auf der senkrecht stehend zwei Seitenwände 18, 19 und eine zwischen den Seitenwänden 18, 19 angeordnete Mittelwand 13 angeformt sind. Die erste Seitenwand 18 und die Mittelwand 13 bilden zwischen sich einen ersten Aufnahmeraum 11 für die Knickschutztülle eines ersten Einzelsteckverbinders. Der erste Aufnahmeraum 11 hat einen runden bzw. halbrunden Querschnitt. An seiner Innenseite sind parallele Rippen 17 angeordnet, die sich beim Klammern der Einzelsteckverbinder (23, 24 in Fig. 2) in die relativ weiche Knickschutztülle (25, 26 in Fig. 2) eindrücken und so ein Verrutschen der Steckverbinder in Steckrichtung verhindern. Die zweite Seitenwand 19 und die Mittelwand 13 bilden zwischen sich einen zweiten Aufnahmeraum 12. Der zweite Aufnahmeraum 12 hat einen vieleckigen, in diesem Beispiel trapezförmigen, Querschnitt mit schrägen Seitenwänden, deren Abstand voneinander sich nach aussen hin vergrössert. Nimmt der zweite Aufnahmeraum 12 die üblicherweise runde Knickschutztülle eines Einzelsteckverbinders auf, ergeben sich durch die Fehlanpassung zwischen rundem und trapezförmigem Querschnitt leere Zwischenräume, in die sich die elastisch verformbare Knickschutztülle zur Anpassung ausbreiten kann.

Die beiden Klammerhälften 10a und 10b mit den beiden unterschiedlichen Aufnahmeräumen 11 und 12 werden nun gemäss Fig. 1 und 2 so einander gegenüber angeordnet und einrastend miteinander verbunden, dass für jeden der zu verbindenden Einzelsteckverbinder 23, 24 jeweils ein kompletter Aufnahmeraum zur Verfügung steht, der sich zur Hälfte aus einem ersten und einem zweiten Aufnahmeraum 11 bzw. 12 zusammensetzt. Auf die Fig. 2 bezogen bedeutet dies, dass die obere Knickschutztülle 25 in einem Aufnahmeraum gehalten wird, der sich aus dem ersten (runden) Aufnahmeraum 11 der linken Klammerhälfte 10a und dem zweiten (trapezförmigen) Aufnahmeraum 12 der rechten Klammerhälfte 10b zusammensetzt. Genau umgekehrt liegen die Verhältnisse bei der unteren Knickschutztülle 26. Durch die Kombination eines runden mit einem trapezförmigen Aufnahmeraum wird für jeden der Einzelsteckverbinder 23, 24 eine gute und rutschsichere Klemmung für ein relativ grosses Toleranzfeld von Knickschutzdurchmessern erreicht. Durch die mit Rippen 17 versehene runde Aufnahmeseite (Aufnahmeraum 11) wird dabei sichergestellt, dass die Verbindungsklammer 10 fest auf der Knickschutztülle hält und nicht verschiebbar ist. Mit der angeschrägten (Trapez-)Form auf der anderen Aufnahmeseite wird erreicht, dass alle gängigen Steckverbindertypen und -fabrikate verklemmt und somit duplexiert werden können.

Zum einrastenden Verbinden der beiden Klammerhälften 10a und 10b sind an den Querseiten als Rast- und Verbindungsmittel jeweils eine angeformte Rastzunge 14 mit einer Rastnase 15 (an der einen Klammerhälfte) und eine Rastzungen-Führung 16 mit einer Rastkante 29 (an der anderen Klammerhälfte) vorgesehen. Werden die beiden Klammerhälften 10a,b in der Anordnung gemäss Fig. 1 aufeinander zubewegt, greifen die Rastzungen 14 in die Rastzungen-Führungen 16 ein und gleiten darin, bis die (elastisch verbiegbaren) Rastzungen 14 mit ihren Rastnasen 15 hinter den Rastkanten 29 einrasten. Der für eine sichere Verrastung notwendige Anpressdruck der Rastzungen 14 in den Rastzungen-Führungen 16 wird dadurch erzeugt, dass die schrägen inneren Wände 31, 32 der trapezförmigen Aufnahmeräume 12 beim Schliessen der Verbindungsklammer 10 aneinander entlanggleiten und eine das Einrasten unterstützende Querverschiebung der Klammerhälften 10a,b relativ zueinander bewirken.

Auf der Aussenseite der Grundplatte 30 sind bei den Klammerhälften 10a,b jeweils in einem mittleren Streifen quer verlaufende Griffrippen 22 eingeformt. Diese Griffrippen 22 ermöglichen einen sicheren Griff der Verbindungsklammer 10 beim Betätigen des komplett montierten Mehrfachsteckverbinders. Die Einzelsteckverbinder 23, 24 der Duplexanordnung brauchen daher zumindest beim Einstecken nicht an ihren Gehäusen 27, 28 angefasst zu werden, so dass eine ungleichmässige Belastung der Duplexanordnung beim Betätigen vermieden wird. Wie aus Fig. 2 ersichtlich ist, klemmen die beiden Klammerhälften 10a,b der Verbindungsklammer 10 die Einzelsteckverbinder 23, 24 im Bereich der Knickschutztüllen 25 und 26 direkt hinter den Gehäusen 27 und 28. Beim Einstecken des Mehrfachsteckverbinders kann so die Einsteckkraft direkt und gleichmässig von der Verbindungsklammer in die beiden Gehäuse 27, 28 eingeleitet werden.

Auf beiden Seiten des mittleren Streifens mit den Griffrippen 22 sind in der Grundplatte 30 Anschrägungen 20, 21 vorgesehen. Diese Anschrägungen 20, 21 schaffen Platz für die Aufnahme von etwaigen Entriegelungshebeln, die an den Einzelsteckverbindern angebracht sein können. Derartige Entriegelungshebel sind bei den beispielhaften Einzelsteckverbindern 23, 24 der Fig. 2 zwar nicht vorgesehen, können aber bei anderen Steckverbindertypen, bei denen die Erfindung mit Vorteil eingesetzt werden kann, durchaus vorhanden sein (siehe z.B. die EP-A1-0 823 649).

Die Klammerhälften 10a,b bestehen beispielsweise aus einem geeigneten Kunststoff und sind vorzugsweise als Spritzgussteile hergestellt. Da beide Klammerhälften 10a,b identisch sind, wird bei der Herstellung nur eine Spritzgussform benötigt. Gleichzeitig wird die Lagerhaltung vereinfacht. Da eine Ausführung der Verbindungsklammer 10 für Steckverbindertypen mit unterschiedlichen Durchmessern der Knickschutztüllen einsetzbar ist, ergibt sich eine deutlich vereinfachte Bevorratung und Handhabung im Ausseneinsatz.

Die Erfindung ist vorgängig am Beispiel der Verbindung von zwei Einzelsteckverbindern (insbesondere Simplexsteckverbindern) zu einem Doppelsteckverbinder (Duplexsteckverbinder) erläutert worden. Es versteht sich von selbst, dass im Rahmen der Erfindung auch mehr als zwei Einzelsteckverbinder zu einem entsprechenden Mehrfachsteckverbinder verbunden werden können.

### BEZUGSZEICHENLISTE

- 10: Verbindungsklammer
- 10a,b: Klammerhälfte
- 11: Aufnahmeraum (rund)
- 12: Aufnahmeraum (trapezförmig)
- 13: Mittelwand
- 14: Rastzunge
- 15: Rastnase
- 16: Führung (Rastzunge)
- 17: Rippe
- 18,19: Seitenwand
- 20,21: Anschrägung
- 22: Griffrippe
- 23,24: Einzelsteckverbinder
- 25,26: Knickschutztülle
- 27,28: Gehäuse
- 29: Rastkante
- 30: Grundplatte
- 31,32: schräge Wand

## Patentansprüche

1. Faseroptisches Steckverbindersystem, bei welchem mehrere faseroptische Einzelsteckverbinder (23, 24) mittels einer Verbindungsklammer (10) in paralleler Anordnung zu einem Mehrfachsteckverbinder verbunden werden, wobei die Verbindungsklammer (10) aus zwei Klammerhälften (10a, 10b) besteht, welche einrastend miteinander verbindbar sind und Aufnahmeräume (11, 12) zur Aufnahme und Halterung der beiden Einzelsteckverbinder (23, 24) aufweisen, und wobei die Einzelsteckverbinder (23, 24) jeweils ein Gehäuse (27, 28) und eine an das Gehäuse (27, 28) nach hinten anschliessende Knickschutztülle (25, 26) umfassen, **dadurch gekennzeichnet, dass** die Einzelsteckverbinder (23, 24) von der Verbindungsklammer (10) im Bereich ihrer Knickschutztüllen (25, 26) miteinander verbunden und in paralleler Anordnung gehalten werden.

2. Steckverbindersystem nach Anspruch 1, **dadurch gekennzeichnet, dass** die Aufnahmeräume (11, 12) der Klammerhälften (10a, 10b) in Form und Abmessung so ausgebildet sind, dass in ihnen Knickschutztüllen (25, 26) mit unterschiedlichen Aussendurchmessern klemmend gehalten werden.

3. Steckverbindersystem nach Anspruch 2, **dadurch gekennzeichnet, dass** pro Knickschutztülle (25, 26) wenigstens ein Aufnahmeraum (12) mit einem vieleckigen, vorzugsweise trapezförmigen, Querschnitt vorgesehen ist.

4. Steckverbindersystem nach Anspruch 3, **dadurch gekennzeichnet, dass** in jeder der Klammerhälften (10a, 10b) für jeden der Einzelsteckverbinder (23, 24) jeweils ein Aufnahmeraum (11, 12) vorgesehen ist, und dass einer der beiden jedem Einzelsteckverbinder (23, 24) zugeordneten Aufnahmeräume (11, 12) einen vieleckigen, vorzugsweise trapezförmigen, Querschnitt und der andere einen runden Querschnitt aufweist.

5. Steckverbindersystem nach einem der Ansprüche 1 bis 4, **dadurch gekennzeichnet, dass** die beiden Klammerhälften (10a, 10b) gleich sind und durch Drehung um eine parallel zur Steckrichtung verlaufende Drehachse ineinander übergehen.

6. Steckverbindersystem nach einem der Ansprüche 1 bis 5, **dadurch gekennzeichnet, dass** auf den Aussenseiten der Klammerhälften (10a, 10b) Anschrägungen (20, 21) zur Aufnahme von Hebeln ausgebildet sind, welche zum Entriegeln der Einzelsteckverbinder (23, 24) vorgesehen sein können.

7. Verbindungsklammer (10) für ein Steckverbindersystem nach einem der Ansprüche 1 bis 6, bestehend aus zwei Klammerhälften (10a, 10b), welche einrastend miteinander verbindbar sind und Aufnahmeräume (11, 12) zur Aufnahme und Halterung zweier mit Knickschutztüllen (25, 26) ausgerüsteter Einzelsteckverbinder (23, 24) aufweisen, **dadurch gekennzeichnet, dass** die Aufnahmeräume (11, 12) der Klammerhälften (10a, 10b) in Form und Abmessung so ausgebildet sind, dass bei montierter Verbindungsklammer (10) in ihnen die Knickschutztüllen (25, 26) der Einzelsteckverbinder (23, 24) klemmend gehalten werden.

8. Verbindungsklammer nach Anspruch 7, **dadurch gekennzeichnet, dass** die Aufnahmeräume (11, 12) der Klammerhälften (10a, 10b) in Form und Abmessung so ausgebildet sind, dass in ihnen Knickschutztüllen (25, 26) mit unterschiedlichen Aussendurchmessern klemmend gehalten werden.

9. Verbindungsklammer nach Anspruch 8, **dadurch gekennzeichnet, dass** pro Knickschutztülle (25, 26) wenigstens ein Aufnahmeraum (12) mit einem vieleckigen, vorzugsweise trapezförmigen, Querschnitt vorgesehen ist.

10. Verbindungsklammer nach Anspruch 9, **dadurch gekennzeichnet, dass** in jeder der Klammerhälften (10a, 10b) für jeden der Einzelsteckverbinder (23, 24) jeweils ein Aufnahmeraum (11, 12) vorgesehen ist, und dass einer der beiden jedem Einzelsteckverbinder (23, 24) zugeordneten Aufnahmeräume (11, 12) einen vieleckigen, vorzugsweise trapezförmigen, Querschnitt und der andere einen runden Querschnitt aufweist.

11. Verbindungsklammer nach einem der Ansprüche 7 bis 10, **dadurch gekennzeichnet, dass** die beiden Klammerhälften (10a, 10b) gleich sind und durch Drehung um eine parallel zur Steckrichtung verlaufende Drehachse ineinander übergehen.

12. Verbindungsklammer nach Anspruch 10, **dadurch gekennzeichnet, dass** in wenigstens einem der Aufnahmeräume (10, 11) als Rutschsicherung quer zur Steckrichtung verlaufende Rippen (17) angeordnet sind.

13. Verbindungsklammer nach einem der Ansprüche 1 bis 12, **dadurch gekennzeichnet, dass** auf zwei gegenüberliegenden Seiten der Klammerhälften (10a, 10b) jeweils Mittel (14, 15, 16) zum Einrasten der Klammerhälften (10a, 10b) vorgesehen sind.

14. Verbindungsklammer nach Anspruch 13, **dadurch gekennzeichnet, dass** die Einrastmittel jeweils eine Rastzunge (14) mit einer Rastnase (15) an der einen Klammerhälfte und eine Führung (16) für die Rastzunge (14) mit einer Rastkante (29) an der anderen Klammerhälfte umfassen.

15. Verbindungsklammer nach Anspruch 14, **dadurch gekennzeichnet, dass** der für eine sichere Verrastung notwendige Anpressdruck der Rastzungen (14) in den Rastzungen-Führungen (16) dadurch erzeugt wird, dass schräge Wände (31, 32) an den Klammerhälften (10a,b) beim Schliessen der Verbindungsklammer (10) aneinander entlanggleiten und eine das Einrasten unterstützende Querverschiebung der Klammerhälften (10a,b) relativ zueinander bewirken.

16. Verbindungsklammer nach Anspruch 14, **dadurch gekennzeichnet, dass** die Klammerhälften (10a, 10b) jeweils als einstückige Spritzgussteile aus einem Kunststoff hergestellt sind, und dass die Rastzunge (14) mit der Rastnase (15) jeweils an der Klammerhälfte angeformt ist.
